# EUROPÄISCHE PATENTSCHRIFT

(11) **EP 3 635 358 B1**
(45) Veröffentlichungstag und Bekanntmachung des Hinweises auf die Patenterteilung: **19.05.2021**
(21) Anmeldenummer: 18752083.8
(22) Anmeldetag: 04.06.2018
(51) Int. Cl.: G01M 3/16, G01N 27/22, E04D 13/00

(54) **VORRICHTUNG ZUR LECKORTUNG UND FEUCHTEÜBERWACHUNG**
DEVICE FOR THE DETECTION OF LEAKS AND MONITORING OF HUMIDITY
DISPOSITIF POUR LA DÉTECTION DE FUITE ET LA SURVEILLANCE DE L'HUMIDITÉ

(30) Priorität: 07.06.2017 AT 504772017
(43) Veröffentlichungstag der Anmeldung: 15.04.2020
(73) Patentinhaber: Roofsec GmbH, 4211 Alberndorf in der Riedmark (AT)
(72) Erfinder: STADLER, Thomas, 4209 Engerwitzdorf (AT)
(74) Vertreter: Burgstaller, Peter
(86) Internationale Anmeldenummer: PCT/AT2018/060115
(87) Internationale Veröffentlichungsnummer: WO 2018/223169

(56) Entgegenhaltungen:
- EP-A1- 2 653 860
- DE-A1- 4 024 049
- DE-T2- 69 409 011

## Beschreibung

Die Erfindung betrifft eine Vorrichtung zur Leckortung und Feuchteüberwachung von Bauten, umfassend eine mit gekapselten Sensoren bestückte elektrische Leitung, welche unter bzw. über einer Abdichtung oder Dampfsperre in Form von flüssigkeits- und diffusionsdichten Folien an Gebäuden oder Baukörpern zur Ortung von Feuchtigkeit oder Flüssigkeit angebracht wird.

Bei Gebäuden und Dachkonstruktionen, insbesondere Flachdächern, kann es aufgrund von Baufehlern oder unvorhergesehener mechanischer Beanspruchungen zu Undichtheiten bei der Abdichtung des Daches kommen. Diese Schäden werden häufig sehr spät erkannt, wodurch es zu größeren Schadenssummen und aufwendigen Sanierungen kommen kann. Um Leckagen oder Feuchtigkeit in Dachkonstruktionen zu eruieren ist der Einbau von Feuchtigkeitssensoren, beispielsweise kapazitiven Sensoren, mit vernetzten Kommunikationseinheiten zur laufenden Überwachung der Dichtheit des Daches möglich.

Die DE69409011T2 offenbart die Verwendung von kapazitiven Näherungssensoren zur Detektion von Flüssigkeit in einem vom Sensor abgetrennten Rohrabschnitt. Eine Vielzahl von einzelnen Sensoren ist durch eine gemeinsame Stromversorgung sowie durch Datenleitungen mit einem Anzeigesystem verbunden. Dabei besitzt jeder Sensor eine eigene Datenleitung.

Die DE4024049A1 offenbart ein Messsystem zur Anordnung unterhalb einer Dachhaut bzw. Wassersperre, wobei eine Messeinheit mit sternförmig angeordneten Messfühlern in Wirkverbindung steht.

Die EP2653860A1 beschreibt ein Bewässerungssystem mit Sensoren zur Feuchtemessung im Boden.

Aus dem Stand der Technik sind Vorrichtungen zur Leckortung und Feuchteüberwachung in Dachkonstruktionen bereits hinreichend bekannt. Die US5818340A, DE102011100451A1 und DE102008039857A1 zeigen beispielsweise kapazitive Feuchtesensoren zur Leckortung in Flachdächern. Dabei bestehen die Sensoren der US5818340A sowie DE102011100451A1 aus einem LC-Schwingkreis mit einer bekannten Resonanzfrequenz, wobei sich zwischen den Platten ein Dielektrikum mit bekannter Dielektrizitätskonstante befindet. Dringt Wasser ein wird folglich die Kapazität des Kondensators sowie die Resonanz des Schwingkreises verändert, wodurch eine Leckage eruiert werden kann. Die Sensoren sind zwischen der Dampfsperre und einer Deckschicht angebracht. Dadurch sind die Sensoren vor der Umwelt geschützt, solange sich das Dach im intakten Zustand befindet. Nachteilig ist, dass unter die Dachschicht eintretendes Wasser auch in die Sensoren eindringt und dadurch die Nutzungsdauer der Sensoren minimiert wird.

In der DE102008039857A1 wird durch die Dachaußenhaut (erste Elektrode) sowie die Tragschale (zweite Elektrode) ein Plattenkondensator als "Sensor" herangezogen. Dabei dienen die Dämmung, die Dampfsperre und die Stützelemente als Dielektrikum. Bei Wassereintritt wird erneut eine messbare Veränderung der Dielektrizitätskonstante verursacht, wodurch ein Wassereintritt eruiert werden kann. Da in der DE102008039857A1 die Dachaußenhaut als Elektrode des Plattenkondensators fungiert ist hier die Lebensdauer des Sensors direkt an die Lebensdauer des Daches gekoppelt.

In der DE3636074A1 werden Sensoren kabelgebunden oder drahtlos mit einem Kontrollgerät verbunden. Dabei werden die Sensoren durch Bohrungen der oberen Dichtungsschicht und der Dämmschicht in der Dachkonstruktion angebracht. Bei Wassereintritt wird dies von den Sensoren durch Widerstandsmessung zwischen freiliegenden Kontakten detektiert und vom Kontrollgerät optisch oder akustisch ausgegeben. Nachteilig an diesem System ist, dass die Sensoren durch Bohrungen angebracht werden und nur durch Anbringung zwischen zwei Schichten dichtend verschlossen werden. Tritt eine Beschädigung an den Schichten auf kann die Dichtheit der Sensoren ebenfalls nicht gewährleistet werden.

In der DE102005049651A1 werden diffusionsdurchlässige Sensoren über ein Netz von elektrisch leitenden Verbindungen gekoppelt. Dabei wird jeder Sensor im Bereich eines Knotenpunktes des Netzes angeordnet und weist digitale Schnittstellen auf, welche separat adressier- und auslesbar sind. Der Nachteil dieses Systems ist, dass der Feuchtesensor diffusionsdurchlässig ist. Dadurch kann ebenfalls eine Beschädigung des Sensors durch Feuchtigkeit oder Flüssigkeit nicht vermieden werden.

Die bisher bekannten Feuchtigkeitssensoren sind demnach nicht oder nur bei intaktem Dach gegen Niederschlag, Nässe oder Feuchtigkeit geschützt. Dadurch ist die Lebensdauer der Sensoren auf die Haltbarkeit des Daches beschränkt. Sobald Feuchtigkeit oder Flüssigkeit in das Dach eindringt, können die Sensoren beschädigt werden.

Die der Erfindung zu Grunde liegende Aufgabe besteht darin eine Vorrichtung zur Leckortung und Feuchteüberwachung von Gebäuden oder Gebäudeteilen bereitzustellen, welche nach Eintreten von Feuchtigkeit oder Flüssigkeit ein Signal an ein Meldesystem sendet und besser gegen eindringende Flüssigkeit geschützt ist.

Die Aufgabe wird gelöst durch eine Vorrichtung gemäß Anspruch 1. Ein weiterer Aspekt der Erfindung ist ein Herstellungsverfahren gemäß Anspruch 12.

Eine solche Vorrichtung verwendet einen Sensor, welcher durch Kapselung der Sensoren bzw. der gesamten Leiterplatine (samt Sensor und Anschlussstellen) die elektronischen Bauteile vor Witterung und Umwelteinflüssen schützt. Durch die Kapselung wird der Sensor von der Außenwelt geschützt und es kann keine Flüssigkeit bzw. Feuchtigkeit eindringen. Zusätzlich wird durch die Trennung der Sensoren von der nächstgelegenen Gebäudeschicht auch ein Schutz vor eventueller mechanischer Beanspruchung ermöglicht. Der Sensor ist ein kapazitiver Näherungssensor, was gegenüber bisher verwendeten kapazitiven Feuchtigkeitssensoren den Vorteil hat, dass dieser nicht die Änderung der Dielektrizitätskonstante im Inneren eines Kondensators misst, sondern den Bereich angrenzend an die Sensorfläche des Näherungssensors.

Die Erfindung wird an Hand von Zeichnungen veranschaulicht:
- Fig. 1:: zeigt eine schematische Darstellung eines typischen Flachdachaufbaus.
- Fig. 2:: zeigt eine schematische Darstellung einer erfindungsmäßigen Anbringung von Sensoren in einem Flachdachaufbau.
- Fig. 3:: zeigt eine schematische Darstellung eines beispielhaften Verlegemusters der erfindungsgemäßen Leitung mit gekapselten Sensoren.

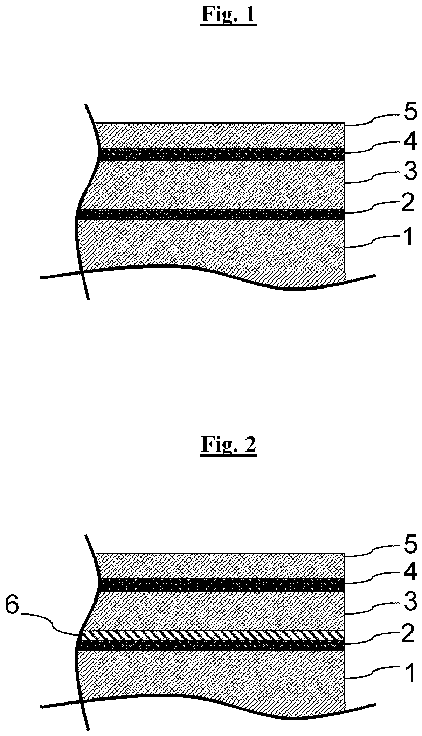

In der Fig. 1 wird schematisch eine Schnittzeichnung eines typischen Flachdachaufbaus dargestellt. Dabei ist die oberste Schicht eine Schutzschicht 5, welche beispielsweise als Kiesschüttung oder als begrüntes Außendach ausfallen kann. Unter der Schutzschicht 5 wird eine Abdichtung 4 angebracht, welche Schmutz und Feuchtigkeit abweisen soll. Unter der Abdichtung 4 wird in der Regel eine Wärmedämmung 3 angebracht. Unter der Wärmedämmung 3 folgt anschließend eine Dampfsperre 2, welche das Diffundieren von Feuchtigkeit von der Wohnrauminnenluft in Richtung Wärmedämmung 3 verhindern soll. Die Dampfsperre 2 liegt direkt auf der Unterkonstruktion 1 des Daches auf.

In der Fig. 2 wird schematisch eine Schnittzeichnung einer Anbringung von erfindungsmäßigen kapazitiven Sensoren auf einem beispielhaften Flachdach dargestellt. Dabei wird unter der Abdichtung 4, bevorzugt zwischen Wärmedämmung 3 und Dampfsperre 2 eine elektrische Leitung mit daran angebrachten kapazitiven Sensoren als Sensorschicht 6 nach einem nahezu beliebigen Verlegemuster angebracht. Auf dieser elektrischen Leitung befinden sich in vordefinierten Abständen Leiterplatinen, an denen kapazitive Messsensoren und Microcontroller angebracht und miteinander verbunden werden. Die Verbindung der einzelnen kapazitiven Sensoren erfolgt erfindungsgemäß mit einem BUS-System. Damit eine lange Lebensdauer der Messsensoren erzielt werden kann, werden die Platinen gänzlich gekapselt. Die Kapselung erfolgt bevorzugt durch Lackierung, Verguss oder Anbringung eines Schrumpfschlauches über der Leiterplatine und den daran angebrachten Messsensoren und Anschlussstellen. Die elektrische Leitung mit daran angebrachten kapazitiven Sensoren wird mit einer Kommunikationseinheit bevorzugt im Inneren des Gebäudes verbunden, an welche gesammelt Daten der kapazitiven Sensoren gesendet werden, wodurch eine Fernüberwachung der angebrachten kapazitiven Sensoren ermöglicht wird. Die Fernüberwachung der kapazitiven Sensoren erfolgt in beliebiger Form, bevorzugt mit einer internen Kommunikationseinheit, welche die gesammelten Daten per LAN oder GSM-Modul an ein Cloudportal sendet und der Endverbraucher bei Eintritt von Flüssigkeiten oder Auftreten von Feuchtigkeit im Dachinneren verständigt wird.

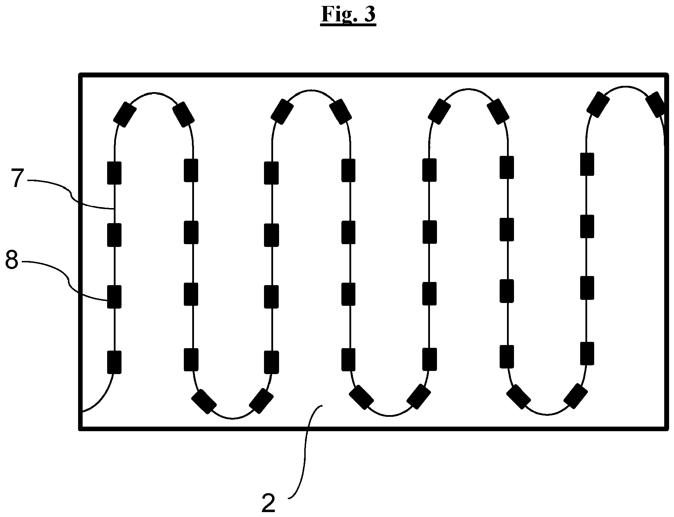

In Fig. 3 wird eine schematische Darstellung eines beispielhaften Verlegemusters des erfindungsgemäßen Sensorkabels gezeigt. Dabei wird eine elektrische Leitung 7 in einem vordefinierten Abstand, bevorzugt zwischen 0,5 und 2 m, mit kapazitiven Sensoren 8 versehen und in nahezu beliebigen Bahnen verlegt. Die elektrische Leitung 7 mit den daran angebrachten kapazitiven Sensoren 8 wird dabei bevorzugt unter der Abdichtung 4, besonders bevorzugt auf der Dampfsperre 2 angebracht. Nach erfolgter Verlegung wird die Position aller kapazitiven Sensoren 8 in einem zentralen System erfasst. Dadurch kann bei einem eruierten Feuchteeintritt durch Meldung eines kapazitiven Sensors 8 eine Lokalisierung des Lecks erfolgen und gezielte Maßnahmen getroffen werden.

Damit der kapazitive Sensor 8 zur Detektion von Feuchtigkeit und Wasser keinen direkten Kontakt mit dem eintretenden Wasser bzw. der eintretenden Feuchtigkeit aufweisen muss, wird ein kapazitiver Näherungssensor herangezogen. Durch den Näherungssensor kann berührungsfrei das Vorhandensein von Flüssigkeiten oder zu hoher Feuchtigkeit ohne direktem Kontakt zum kapazitiven Sensor 8 erfolgen. Da Luft und Wasser eine relative Permittivität im Verhältnis von 1 zu 80 (bei 20 °C) aufweisen, wird bei Nässe- oder Feuchteeintritt das Lade- bzw. Entladeverhalten des kapazitiven Sensors verändert. Das elektrische Entladeverhalten wird bevorzugt mittels Schmitt-Trigger in ein Rechtecksignal umgewandelt. Die analoge Rechteck-Spannung wird bevorzugt anschließend von einem Mikrocontroller als Frequenz umgewandelt. Wird eine zuvor eingestellte Frequenzänderung der elektrischen Kapazität überschritten, wird ein Feuchtigkeits- bzw. Flüssigkeitseintritt signalisiert. Der Schwellenwert der Frequenzänderung in Bezug auf das Medium kann durch auf der Leiterplatine verbaute Widerstände kalibriert werden, wodurch die notwendige Frequenzdifferenz in Bezug auf die Materialstärke des Vergusses erzielt wird.

Der Näherungssensor stellt somit eine Zunahme der Feuchtigkeit im angrenzenden Material, meist Isoliermaterial fest. Da dies durch die diffusionsdichte Kapselung hindurch erfolgt, sollte die Schichtdicke der Kapselung gering gehalten werden.

Zur Anbringung der Kapselung muss die Leiterplatine mit daran angebrachten kapazitiven Sensor 8 vollflächig geschützt werden. Dazu eignen sich bevorzugt Lackierungen oder Verguss.

Bei einer bevorzugten Ausführungsvariante zur Kapselung wird dazu jede Leiterplatine mit dem jeweils daran angebrachten kapazitiven Sensor 8 in eine Form gelegt und allseits im Verguss eingeschlossen. Dabei muss oberhalb der Messfläche des kapazitiven Sensors 8 eine vollflächige und geringe Schichtdicke erzielt werden, um eine Messung durch diese hindurch zu erlauben. Dazu wird die Leiterplatine mit der Messfläche des Sensors mit geringem Abstand zu einer Grenzfläche der Form gelegt, so dass dort eine minimale Schichtdicke, bevorzugt im Bereich 25 bis 55 µm resultiert. Anschließend kann die Leiterplatine an einer elektrischen Leitung 7 angebracht werden, wobei bevorzugt das Anbringen an die elektrische Leitung 7 jedoch vor dem Verguss erfolgt, sodass auch die Anschlussstellen gekapselt sind.

Bei einer weiteren Ausführungsvariante zur Kapselung wird die Leiterplatine mit daran angebrachten kapazitiven Sensoren 8 mittels Tauchlackierung gekapselt. Bevorzugt werden die Leiterplatinen mit daran angebrachten kapazitiven Sensoren 8 bereits zuvor an der elektrischen Leitung 7 montiert. In einer bevorzugten Ausführungsvariante werden die Leiterplatinen zu Gruppen zusammengefasst, beispielsweise 10 Leiterplatinen in einem definierten Abstand. Anschließend wird die elektrische Leitung 7 mit daran angebrachten Leiterplatinen durch Tauchlackierung vor Feuchte und Flüssigkeiten geschützt. Ein wesentlicher Vorteil dieser Ausführungsvariante ist, dass mehrere Leiterplatinen gleichzeitig lackiert werden können. Die Schichtdicke des Lacks liegt dabei in einem bevorzugten Bereich von 25 - 55 µm. Um die lackierte Leiterplatine auch vor mechanischer Beanspruchung zu schützen, werden Einpressstifte in die Platine eingebracht. Diese werden so platziert, dass eine einwirkende mechanische Kraft von den Einpressstiften aufgenommen und dadurch die mechanische Beanspruchung von verlöteten Bauteilen minimiert wird.

Erfindungsgemäß werden eindeutig identifizierbare Mikroprozessoren an der Leiterplatine angebracht. Durch den angebrachten Mikroprozessor kann bei Feststellung eines Wasser- oder Feuchteeintrittes die genaue Position lokalisiert und dem Anwender angezeigt werden. Dadurch wird dem Benutzer neben der Feststellung eines Nässe- oder Feuchteeintrittes auch die konkrete Position der Leckage bekanntgegeben.

In einer weiteren bevorzugten Ausführungsvariante wird auf jeder Leiterplatine ein Funktransponder angebracht, wodurch eine Vielzahl an Funktransponder auf der verlegten elektrischen Leitung 7 vorhanden ist. Die Funktransponder kommunizieren miteinander, wodurch deren Position durch geometrische Algorithmen erfasst wird. Die Verlegung der elektrischen Leitung 7 bzw. den darauf angebrachten Sensoren 8 kann dadurch vollautomatisch erfasst werden. In einer bevorzugten Ausführungsvariante wird die Leiterplatine mit einer visuellen Anzeige, beispielsweise LED Anzeige, zur Statusanzeige versehen. Dadurch kann im Fehler- oder Servicefall jede einzelne Platine visuell markiert und rasch eruiert werden.

Wird eine elektrische Leitung 7 mit daran angebrachten kapazitiven Sensoren 8 beispielsweise zwischen Dampfsperre 2 und Wärmedämmung 3 angebracht, so kann die Ausrichtung der Sensorfläche beispielsweise nach unten in Richtung Dampfsperre 2, seitlich oder nach oben in Richtung der Wärmedämmung 3 erfolgen. Eine weitere mögliche Ausführungsform ist, dass mehrere Sensoren 8 an einer Leiterplatine angebracht und unterschiedlich ausgerichtet werden.

Die beschriebene Vorrichtung zur Leckortung und Feuchteüberwachung kann für alle Arten von Dachkonstruktionen verwendet werden, insbesondere Flachdächer, Ziegeldächer und Blechdächer. Eine Anwendung für andere Gebäudeflächen und Bauten, beispielsweise Mauern oder Bauten unter der Erdoberfläche wie Tiefgaragen, ist ebenfalls möglich.

## Patentansprüche

1. Vorrichtung zur Leckortung für Bauten umfassend eine elektrische Leitung (7) in Form eines Sensorkabels, umfassend die Datenleitung eines Bus-Systems, an welchem in vordefinierten Abständen Leiterplatinen angebracht sind, an welchen Leiterplatinen Sensoren (8) zur Erkennung von Feuchtigkeit und eindeutig identifizierbare Mikroprozessoren angeordnet sind, wobei die Vorrichtung bestimmungsgemäß unter einer flüssigkeits- und diffusionsdichten Schicht eines Gebäudes anzubringen ist, wobei die Sensoren (8) kapazitive Näherungssensoren sind, die jeweils gemeinsam mit einem eindeutig identifizierbaren Mikroprozessor an einer Leiterplatine angebracht sind, wobei die elektrische Leitung (7) die Leiterplatinen untereinander verbindet und wobei die Leiterplatinen mit allen darauf befindlichen Bauteilen inklusive den kapazitive Näherungssensoren vollständig diffusionsdicht gekapselt sind und dadurch bei der bestimmungsgemäßen Verwendung unabhängig vom Zustand der flüssigkeits- und diffusionsdichten Schicht des Gebäudes vor Feuchtigkeit und Nässe geschützt sind.

2. Vorrichtung nach Anspruch 1, **dadurch gekennzeichnet, dass** die Kapselung in Form einer Lackierung, als Verguss oder als Schrumpfschlauch vorliegt.

3. Vorrichtung nach Anspruch 2, **dadurch gekennzeichnet, dass** die Kapselung eine Lackierung ist, deren Schichtdicke im Bereich von 25 bis 55 µm liegt.

4. Vorrichtung nach einem der Ansprüche 1 bis 3, **dadurch gekennzeichnet, dass** die Leiterplatinen mit Einpressstiften versehen ist, welche einwirkende mechanische Kräfte aufnehmen.

5. Vorrichtung nach einem der Ansprüche 1 bis 4, **dadurch gekennzeichnet, dass** die Leiterplatinen umfassend die kapazitiven Näherungssensoren (8) in einem Abstand zueinander von 0,5 bis 2 m entlang der elektrischen Leitung (7) angebracht sind.

6. Vorrichtung nach Anspruch 5, **dadurch gekennzeichnet, dass** die Leiterplatinen umfassend die kapazitiven Näherungssensoren (8) in einem Abstand zueinander von 0,8 bis 1,2 m entlang der elektrischen Leitung (7) angebracht sind.

7. Vorrichtung nach einem der Ansprüche 1 bis 6, **dadurch gekennzeichnet, dass** die Leiterplatinen umfassend die kapazitiven Näherungssensoren (8) durch Datenleitungen miteinander verbunden sind.

8. Vorrichtung nach dem Anspruch 7, **dadurch gekennzeichnet, dass** die Leiterplatinen umfassend die kapazitiven Näherungssensoren (8) mit dem BUS-System verbunden sind.

9. Vorrichtung nach einem der Ansprüche 1 bis 8, **dadurch gekennzeichnet, dass** auf jeder Leiterplatine ein Funktransponder angebracht ist, sodass eine Vielzahl an Funktransponder auf der verlegten elektrischen Leitung (7) vorhanden ist, wobei die Funktransponder miteinander kommunizieren, sodass deren Position durch geometrische Algorithmen erfassbar wird.

10. Vorrichtung nach einem der Ansprüche 1 bis 9, **dadurch gekennzeichnet, dass** die Leiterplatinen eine visuelle Anzeige, bevorzugt LED-Anzeige, aufweisen.

11. Vorrichtung nach einem der Ansprüche 1 bis 10, **dadurch gekennzeichnet, dass** die elektrische Leitung (7) mit den daran angebrachten Leiterplatinen umfassend die kapazitiven Näherungssensoren (8) unter einer Abdichtung (4) einer Dachkonstruktion angebracht ist.

12. Vorrichtung nach Anspruch 11, **dadurch gekennzeichnet, dass** die elektrische Leitung (7) mit den daran angebrachten Leiterplatinen umfassend die kapazitiven Näherungssensoren (8) zwischen einer Wärmedämmung (3) und einer Dampfsperre (2) angebracht ist.

13. Vorrichtung nach einem der Ansprüche 11 bis 12, **dadurch gekennzeichnet, dass** diese zur Fernüberwachung ein LAN oder GSM-Modul aufweist.

14. Verfahren zur Herstellung einer Vorrichtung gemäß Anspruch 1, **dadurch gekennzeichnet, dass** die Kapselung eine Lackierung ist, zu deren Herstellung die Leiterplatinen mit allen darauf befindlichen Bauteilen inklusive den kapazitiven Näherungssensoren (8) an einer elektrischen Leitung (7) angebracht werden und anschließend mittels Tauchlackierung mit einer dünnen Lackschicht überzogen werden.

## Claims

1. A device for leakage detection for edifices comprising an electrical line (7) in the shape of a sensor cable, comprising the data line of a bus system to which printed circuit boards are attached at predefined distances from each other, on which printed circuit boards sensors (8) for detecting moisture and uniquely identifiable microprocessors are arranged, wherein the device as intended is to be attached under a liquid- and diffusion-tight layer of a building, wherein the sensors (8) are capacitive proximity sensors each attached to a printed circuit board together with a uniquely identifiable microprocessor, wherein the electrical line (7) interconnects the printed circuit boards, and wherein the printed circuit boards with all components thereon including the capacitive proximity sensors are encapsulated in a completely diffusion-tight manner and thereby protected against moisture and wetness when used as intended, regardless of the condition of the liquid- and diffusion-tight layer of the building.

2. The device of claim 1, **characterised in that** the encapsulation is in the shape of a finish, potting, or heat-shrink tubing.

3. The device of claim 2, **characterised in that** the encapsulation is a finish, the layer thickness of which ranges from 25 to 55 µm.

4. The device of any one of claims 1 to 3, **characterised in that** the printed circuit boards are provided with press-fit terminals, which absorb acting mechanical forces.

5. The device of any one of claims 1 to 4, **characterised in that** the printed circuit boards comprising the capacitive proximity sensors (8) are attached at distances of 0.5 to 2 m from each other along the electrical line (7).

6. The device of claim 5, **characterised in that** the printed circuit boards comprising the capacitive proximity sensors (8) are attached at distances of 0.8 to 1.2 m from each other along the electrical line (7).

7. The device of any one of claims 1 to 6, **characterised in that** the printed circuit boards comprising the capacitive proximity sensors (8) are connected among each other by data lines.

8. The device of claim 7, **characterised in that** the printed circuit boards comprising the capacitive proximity sensors (8) are connected to the BUS system.

9. The device of any one of claims 1 to 8, **characterised in that** a radio transponder is attached to each printed circuit board, so that a plurality of radio transponders are present on the electrical line (7) laid, wherein the radio transponders communicate among each other, so that their positions become capturable by geometrical algorithms.

10. The device of any one of claims 1 to 9, **characterised in that** the printed circuit boards have a visual display, preferably an LED display.

11. The device of any one of claims 1 to 10, **characterised in that** the electrical line (7) with the printed circuit boards attached thereto and comprising the capacitive proximity sensors (8) is attached underneath a sealing (4) of a roof construction.

12. The device of claim 11, **characterised in that** the electrical line (7) with the printed circuit boards attached thereto and comprising the capacitive proximity sensors (8) is attached between a heat insulation (3) and a vapour barrier (2).

13. The device of any one of claims 11 and 12, **characterised in that** it has a LAN or GSM module for remote monitoring.

14. A method of manufacturing a device according to claim 1, **characterised in that** the encapsulation is a finish, for the manufacture of which the printed circuit boards with all components thereon including the capacitive proximity sensors (8) are attached to an electrical line (7) and subsequently coated with a thin layer of varnish using immersion coating.

## Revendications

1. Dispositif de détection de fuites pour bâtiments comprenant une ligne électrique (7) sous la forme d'un câble de capteur, comprenant la ligne de données d'un système de bus sur lequel des cartes de circuits imprimés sont fixées à intervalles prédéfinis sur lesquelles sont disposés des capteurs (8) pour détecter l'humidité et des microprocesseurs identifiables de manière univoque, le dispositif étant destiné à être fixé sous une couche étanche aux liquides et à la diffusion d'un bâtiment, les capteurs (8) étant des capteurs de proximité capacitifs qui sont chacun montés avec un microprocesseur identifiable de manière univoque sur une carte de circuit imprimé, la ligne électrique (7) reliant les cartes de circuit imprimé les unes aux autres, et les cartes de circuit imprimé avec tous les composants qui s'y trouvent, y compris les capteurs de proximité capacitifs, étant complètement encapsulées de manière étanche à la diffusion et étant ainsi protégées de l'humidité pendant l'utilisation prévue, indépendamment de l'état de la couche étanche aux liquides et étanche à la diffusion du bâtiment.

2. Dispositif selon la revendication 1, **caractérisé en ce que** l'encapsulation se présente sous la forme d'un revêtement de vernis, d'un enrobage ou d'un tube flexible thermorétractable.

3. Dispositif selon la revendication 2, **caractérisé en ce que** l'encapsulation est un revêtement de vernis d'une épaisseur variant entre 25 et 55 µm.

4. Dispositif selon l'une des revendications 1 à 3, **caractérisé en ce que** les cartes de circuit imprimé sont munies de bornes pour connexion insérée à force qui absorbent les forces mécaniques agissantes.

5. Dispositif selon l'une des revendications 1 à 4, **caractérisé en ce que** les cartes de circuit imprimé comprenant les capteurs de proximité capacitifs (8) sont montées à une distance les unes des autres de 0,5 à 2 m le long de la ligne électrique (7).

6. Dispositif selon la revendication 5, **caractérisé en ce que** les cartes de circuit imprimé comprenant les capteurs de proximité capacitifs (8) sont placées à une distance les unes des autres de 0,8 à 1,2 m le long de la ligne électrique (7).

7. Dispositif selon l'une des revendications 1 à 6, **caractérisé en ce que** les cartes de circuit imprimé comprenant les capteurs de proximité capacitifs (8) sont interconnectées par des lignes de données.

8. Dispositif selon la revendication 7, **caractérisé en ce que** les cartes de circuit imprimé comprenant les capteurs de proximité capacitifs (8) sont connectées au système BUS.

9. Dispositif selon l'une des revendications 1 à 8, **caractérisé en ce qu'**un transpondeur radio est monté sur chaque carte de circuit imprimé, de sorte qu'une pluralité de transpondeurs radio est présente sur la ligne électrique installée (7), les transpondeurs radio communiquant entre eux afin que leur position puisse être détectée par des algorithmes géométriques.

10. Dispositif selon l'une des revendications 1 à 9, **caractérisé en ce que** les cartes de circuit imprimé comprennent un affichage visuel, de préférence un affichage à LED.

11. Dispositif selon l'une des revendications 1 à 10, **caractérisé en ce que** la ligne électrique (7) avec les cartes de circuit imprimé qui y sont fixées et comprennent les capteurs de proximité capacitifs (8) est montée sous une étanchéité (4) d'une structure de toit.

12. Dispositif selon la revendication 11, **caractérisé en ce que** la ligne électrique (7) avec les cartes de circuit imprimé comprenant les capteurs de proximité capacitifs (8) qui y sont fixés est montée entre une isolation thermique (3) et une barrière de vapeur (2).

13. Dispositif selon l'une des revendications 11 à 12, **caractérisé en ce qu'**il comprend un module LAN ou GSM pour la surveillance à distance.

14. Procédé de fabrication d'un dispositif selon la revendication 1, **caractérisé en ce que** l'encapsulation est un revêtement de vernis, pour la fabrication duquel les cartes de circuit imprimé avec tous les composants qui s'y trouvent, y compris les capteurs de proximité capacitifs (8), sont fixées à une ligne électrique (7) et ensuite recouvertes d'une fine couche de vernis par vernissage au trempé.
